Europäisches Patentamt

European Patent Office

Office européen des brevets

(19)

(11) Numéro de publication : **0 066 520**
**B1**

(12) **FASCICULE DE BREVET EUROPÉEN**

(45) Date de publication du fascicule du brevet :
12.02.86

(51) Int. Cl.⁴ : **G 01 F 23/14, G 01 N 9/28**

(21) Numéro de dépôt : **82400999.7**

(22) Date de dépôt : **01.06.82**

(54) Dispositif pour mesurer une différence de pression dans une colonne pulsée et son application à la mesure du niveau d'interface et de la masse volumique du milieu liquide.

(30) Priorité : **03.06.81 FR 8110985**

(43) Date de publication de la demande :
**08.12.82 Bulletin 82/49**

(45) Mention de la délivrance du brevet :
**12.02.86 Bulletin 86/07**

(84) Etats contractants désignés :
**BE DE GB**

(56) Documents cités :
**FR-A- 821 072**
**FR-A- 1 429 352**
**GB-A- 478 691**
**GB-A- 2 060 428**
**PATENTS ABSTRACTS OF JAPAN, vol. 4, no. 82 (P-15) (564), 13 juin 1980, page 118P15**

(73) Titulaire : **COMMISSARIAT A L'ENERGIE ATOMIQUE Etablissement de Caractère Scientifique Technique et Industriel**
**31/33, rue de la Fédération**
**F-75015 Paris (FR)**

(72) Inventeur : **Auchapt, Pierre**
**Villa 19, Allée du Romarin Cité des Cyprès**
**F-30200 Bagnols sur Cèze (FR)**
Inventeur : **Mathieu, Daniel**
**66, Chemin Saint-Jean**
**F-84000 Avignon (FR)**

(74) Mandataire : **Mongrédien, André et al**
**c/o BREVATOME 25, rue de Ponthieu**
**F-75008 Paris (FR)**

**0 066 520**

## Description

L'invention a pour objet un dispositif pour mesurer une différence de pression à l'intérieur d'une colonne pulsée, pour déterminer la masse volumique d'un milieu liquide ou le niveau de l'interface entre deux phases liquides dans les colonnes pulsées des installations de retraitement de combustibles nucléaires irradiés.

Dans les installations de retraitement de combustibles nucléaires irradiés, on utilise fréquemment des colonnes pulsées dans lesquelles on met en contact une phase aqueuse avec une phase organique pour réaliser l'extraction de l'uranium, du plutonium et/ou des produits de fission. Pour assurer un fonctionnement satisfaisant de ces colonnes pulsées, il est nécessaire de contrôler avec précision l'évolution de certains paramètres qui sont, notamment, le niveau de l'interface dans le décanteur, la densité des phases liquides en circulation dans la colonne et le poids d'une colonne de liquide.

Compte tenu de la radioactivité des phases traitées dans la colonne, il est nécessaire d'utiliser pour ce contrôle des dispositifs automatiques de grande fiabilité, répondant en particulier aux exigences suivantes :
— ces dispositifs ne doivent pas comporter de pièces susceptibles d'être défaillantes, en contact avec les solutions radioactives,
— ils doivent répondre aux conditions de sûreté nucléaire,
— ils doivent être insensibles aux rayonnements ionisants,
— ils doivent être insensibles aux fortes variations de pression interne dues à la pulsation, et
— ils doivent avoir une excellente résistance à la corrosion en présence des solutions radioactives traitées dans la colonne.

On sait que les paramètres tels que le niveau d'interface, le poids d'une colonne de liquide et la densité d'un liquide peuvent être déterminés à partir des valeurs de la pression en un ou plusieurs points situés à l'intérieur de la colonne. Habituellement, on mesure la pression au sein d'un liquide pulsé en plaçant un capteur approprié au contact du liquide et en effectuant la conversion de la pression en un signal électrique utilisable ; avec une réponse dynamique suffisante du capteur, on obtient une mesure fidèle et facile à exploiter. Lorsque les solutions mises en circulation dans la colonne sont des solutions dangereuses ou corrosives, on peut interposer un liquide tampon entre la membrane en contact avec le liquide et la membrane du capteur. Cependant, ces dispositifs de mesure ne sont pas adaptés au cas des colonnes pulsées utilisées pour le traitement de solutions radioactives, en raison des grandes difficultés pour assurer leur maintenance et effectuer des réparations.

On peut aussi mesurer la différence de pression entre deux bains d'un même liquide en déterminant la pression de barbotage d'un gaz tel que de l'air. Dans ce cas, on utilise des tubes plongeurs amenant un courant gazeux dans les liquides à comparer, et un manomètre différentiel pour déterminer la différence de pression entre les deux tubes plongeurs, comme cela est décrit dans le document FR-A-1.429.352.

Dans les colonnes pulsées, on utilise plutôt cette dernière technique pour mesurer la pression au sein du liquide. Les dispositifs utilisables pour cette mesure comprennent simplement des tubes plongeurs qui débouchent dans le liquide de la colonne aux endroits où l'on veut mesurer la pression, des moyens pour introduire dans ces tubes plongeurs un gaz comprimé et des moyens pour mesurer la pression à l'intérieur des tubes plongeurs.

Avec les dispositifs de ce type, la seule partie en contact avec le liquide radioactif est constituée par le tube plongeur qui satisfait aux conditions requises : en effet, celui-ci n'évolue pratiquement pas dans le temps, il peut être facilement débouché par injection d'un liquide approprié en cas d'obturation, il ne pose pas de problème de réalisation pour répondre aux conditions de sûreté nucléaire et il est insensible aux rayonnements ionisants. Par ailleurs, les moyens de mesure de pressions peuvent être constitués dans ce cas par un capteur de type classique puisque celui-ci est situé à l'extérieur de la colonne dans une zone accessible et qu'il est seulement en contact avec de l'air filtré.

Cependant, de tels dispositifs sont mal adaptés pour mesurer la pression dans des colonnes pulsées. En effet, dans ce cas, la pression au sein du liquide de la colonne varie fortement avec les pulsations, ce qui provoque une remontée du liquide dans les tubes plongeurs et une oscillation du niveau de ce liquide en fonction de la pulsation ; de ce fait, la valeur de la pression mesurée dans les tubes plongeurs ne correspond pas à la pression du liquide dans la colonne. Ce problème se rencontre notamment dans le cas de la mesure du niveau d'interface dans le décanteur inférieur d'une colonne pulsée fonctionnant en phase organique continue. En effet, pour cette mesure, il est nécessaire de pouvoir détecter une variation de pression de faible amplitude (par exemple de l'ordre de 30 Pa (0,3 millibar) pour 1 cm de variation du niveau d'interface), et cette variation est noyée dans un bruit de fond de l'ordre de 30 000 à 60 000 Pa (300 à 600 millibars) en raison de la pulsation, soit dans un bruit de fond 1 000 à 2 000 fois plus élevé.

Aussi, un tel dispositif ne peut convenir pour contrôler le niveau d'interface dans une colonne pulsée.

Pour remédier à cet inconvénient, on a envisagé de perfectionner ces dispositifs en utilisant différents systèmes permettant d'atténuer les phénomènes parasites dus à la pulsation. Dans ce but, on a utilisé des amortisseurs pneumatiques sur les tubes plongeurs. On a également envisagé de déterminer le niveau d'interface en mesurant la différence de pression entre deux points $P_1$ et $P_2$ de la colonne par barbotage d'un gaz dans des « pots » rejetés en communication respectivement avec le milieu liquide de

2

la colonne au niveau des points $P_1$ et $P_2$. Cependant, ces systèmes ne sont pas satisfaisants. En effet, lorsqu'on utilise des amortisseurs pneumatiques, la chaîne de mesure doit être étalonnée en fonction des paramètres de fonctionnement de la colonne : pression de pulsation, fréquence de pulsation, débit, etc. ; de ce fait, lorsque ces paramètres varient, on doit recalibrer la chaîne de mesure, ce qui constitue une opération très lourde en exploitation.

Dans le cas du système à « pots » rejetés, celui-ci est difficile à mettre en œuvre au stade industriel en raison de la complexité hydraulique et de l'encombrement des circuits, des risques d'encrassement des canalisations reliant les pots à la colonne et des problèmes posés par une variation brusque du niveau de l'interface.

La présente invention a précisément pour objet un dispositif pour mesurer une différence de pression à l'intérieur d'une colonne pulsée, qui pallie les inconvénients des dispositifs connus actuellement.

A cet effet, le dispositif, selon l'invention, de mesure de la différence de pression entre deux points $P_1$ et $P_2$ situés à l'intérieur d'une colonne pulsée comporte un premier et un second tubes plongeurs débouchant respectivement dans la colonne aux niveaux des points $P_1$ et $P_2$, des moyens pour introduire dans chacun desdits tubes plongeurs un gaz et le faire barboter dans le milieu liquide de la colonne, et des moyens pour déterminer la différence de pression entre lesdits tubes plongeurs, et il se caractérise en ce que le premier et le second tubes plongeurs débouchent respectivement dans la colonne par l'intermédiaire de capacités $C_1$ et $C_2$ ouvertes à leur extrémité inférieure et ayant des sections transversales considérablement plus grandes que celles des tubes plongeurs, lesdites capacités $C_1$ et $C_2$ ayant des dimensions telles que, lors des variations de pression dues à la pulsation, l'interface gaz-liquide soit toujours située dans chacune desdites capacités et que la variation $\Delta x_1$ du niveau de l'interface gaz-liquide dans la capacité $C_1$ et la variation $\Delta x_2$ du niveau de l'interface gaz-liquide dans la capacité $C_2$ soient telles que $\Delta x_1 / \Delta x_2$ reste sensiblement égal à $\rho_2 / \rho_1$, $\rho_1$ et $\rho_2$ représentant respectivement la masse volumique du milieu liquide présent dans la colonne au niveau du point $P_1$ et la masse volumique du milieu liquide présent dans la colonne au niveau du point $P_2$.

La présence de ces capacités permet ainsi de minimiser l'influence défavorable des phénomènes parasites décrits précédemment. En effet, le fait d'utiliser une capacité à l'intérieur de laquelle le niveau de liquide varie peu malgré les pulsations conduit à rendre négligeable l'influence de la hauteur de liquide dans la capacité ainsi que l'inertie et les frottements.

Avantageusement, les capacités ont la forme d'un cylindre droit disposé verticalement, et la section de ce cylindre est choisie en fonction des paramètres de fonctionnement extrêmes de la colonne, notamment de la pression et de la fréquence de pulsation les plus élevées envisagées.

A titre d'exemple, on peut utiliser des capacités de section circulaire ayant un diamètre allant de 20 mm pour les petites colonnes (section de 50 à 80 cm$^2$) à 80 mm pour les grosses colonnes (section supérieure à 700 cm$^2$).

Généralement, on utilise des capacités de section circulaire présentant un diamètre d'au moins 30 mm.

On peut estimer que l'influence de la pression variable au sein du liquide sur la mesure de pression est pratiquement inversement proportionnelle à la section de la capacité. Aussi, on a intérêt à utiliser une capacité de section la plus grande possible.

Par ailleurs, pour que l'interface gaz-liquide soit toujours située dans la capacité, cette dernière doit présenter un volume au moins égal au volume minimal permettant de confiner cette interface à l'intérieur de la capacité.

Avantageusement, la capacité a un volume légèrement supérieur à ce volume minimal.

Dans le dispositif de l'invention, on compense l'influence défavorable des colonnes de liquide présentes dans les capacités $C_1$ et $C_2$ en utilisant des capacités dont les dimensions sont telles que lors des variations de pression dans la colonnes dues à la pulsation, l'effet de la colonne de liquide dans la capacité $C_1$ est annulée par l'effet de la colonne de liquide dans la capacité $C_2$.

Ainsi, on obtient par mesure de la différence de pression entre les tubes plongeurs une mesure pratiquement égale à celle de la différence de pression entre les points $P_1$ et $P_2$.

De préférence, les capacités $C_1$ et $C_2$ ont la forme de cylindres droits disposés verticalement et elles ont respectivement des sections transversales $S_1$ et $S_2$ telles que $S_1 / \rho_1$ soit égal à $S_2 / \rho_2$.

Comme précédemment, la section $S_1$ ou la section $S_2$ est choisie en fonction des paramètres de fonctionnement extrêmes de la colonne.

De même, on utilise des capacités $C_1$ et $C_2$ ayant un volume légèrement supérieur au volume minimal permettant d'assurer le confinement des interfaces gaz-liquide à l'intérieur de ces capacités.

Avantageusement, les capacités $C_1$ et $C_2$ ont une section circulaire. Le volume $V_1$ de la capacité $C_1$ est égal au volume $V_2$ de la capacité $C_2$.

De même, le volume du circuit gazeux en amont de la capacité $C_1$ est sensiblement égal au volume du circuit gazeux en amont de la capacité $C_2$.

Ceci permet en particulier de minimiser les autres perturbations parasites qui seraient susceptibles d'affecter la mesure de la différence de pression.

Le dispositif de l'invention est particulièrement adapté pour assurer la mesure du niveau de l'interface entre deux phases liquides dans le décanteur d'une colonne pulsée.

Dans ce cas, les points $P_1$ et $P_2$ sont situés dans le décanteur de la colonne de part et d'autre de l'interface, et le dispositif comprend de plus des moyens pour déterminer à partir de la différence de pression entre les deux tubes plongeurs, de la distance h entre les points $P_1$ et $P_2$ et des masses volumiques $\rho_1$ et $\rho_2$ des deux phases liquides en circulation dans la colonne, le niveau de l'interface dans ledit décanteur.

Le dispositif de l'invention peut être utilisé également pour la mesure de la masse volumique d'un liquide présent dans une colonne pulsée.

Dans ce cas, les points $P_1$ et $P_2$ où débouchent les tubes plongeurs sont tous deux situés au-dessus ou au-dessous du niveau de l'interface entre deux phases liquides présentes dans une colonne pulsée et le dispositif comprend des moyens pour déterminer à partir de la différence de pression entre les deux tubes plongeurs et de la distance h entre les points $P_1$ et $P_2$, la masse volumique du milieu liquide présent dans la colonne entre les points $P_1$ et $P_2$.

Dans cette application, on peut utiliser des capacités $C_1$ et $C_2$ ayant la forme de cylindres droits de même section et de même hauteur.

D'autres caractéristiques et avantages de l'invention apparaîtront mieux à la lecture de la description qui suit donnée bien entendu à titre illustratif et non limitatif en référence aux dessins annexés, sur lesquels :

la figure 1 représente en coupe verticale une colonne pulsée comprenant un dispositif de mesure du niveau de l'interface, selon l'invention, et

la figure 2 est une vue agrandie des capacités $C_1$ et $C_2$ représentées sur la figure 1.

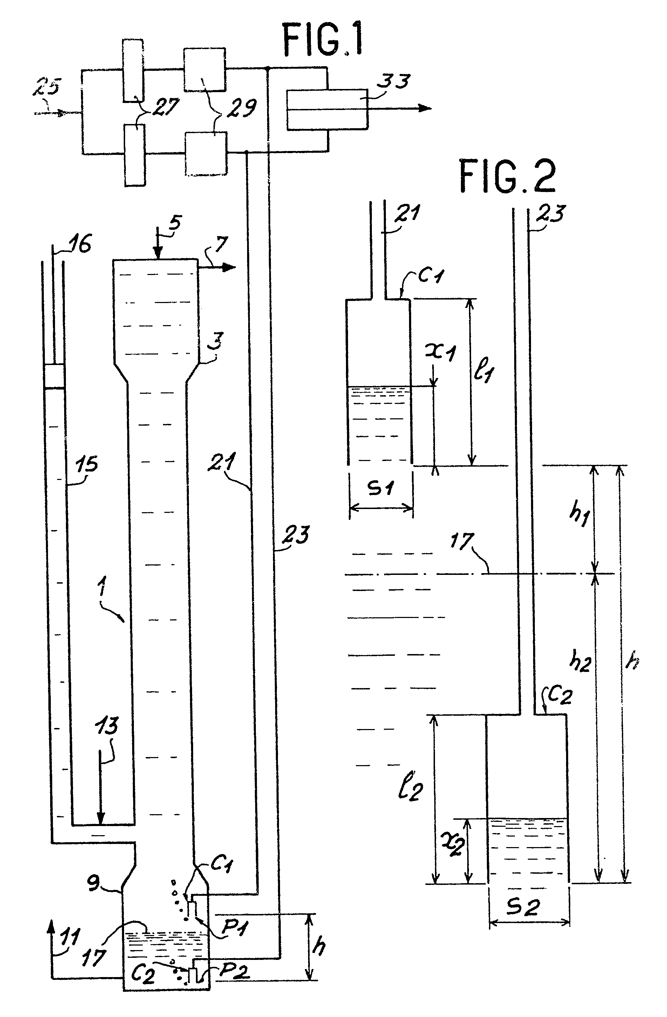

Sur la figure 1, on voit que la colonne 1 qui est de section circulaire présente une partie supérieure élargie 3 munie d'une arrivée de phase lourde 5 et d'une sortie de phase légère 7, et une partie inférieure 9 de section élargie munie d'une sortie de phase lourde 11. Dans le cas représenté sur le dessin, la partie inférieure 9 joue le rôle de décanteur, c'est-à-dire que la colonne fonctionne en phase légère continue. La phase légère est introduite dans la colonne 1 par la conduite 13 qui débouche dans la tubulure 15 de pulsation destinée à transmettre des pulsations aux deux phases liquides mises en contact dans la colonne 1. Cette tubulure 15 est munie à son extrémité supérieure d'un dispositif 16 de pulsation à air dont la pression varie en fonction du temps pour faire osciller le niveau du liquide dans la tubulure de pulsation entre deux positions extrêmes, à une fréquence déterminée.

Dans une colonne de ce type, on contrôle généralement le débit de soutirage de la phase lourde en mesurant le niveau de l'interface 17 dans le décanteur inférieur 9. Dans ce but, on utilise un dispositif pour mesurer la différence de pressions entre deux points $P_1$ et $P_2$ situés dans ce décanteur, de part et d'autre de l'interface 17. Ce dispositif comprend un premier tube plongeur 21 qui débouche dans le décanteur au niveau du point $P_1$, un second tube plongeur 23 qui débouche dans le décanteur au niveau du point $P_2$. Les tubes 21 et 23 sont raccordés respectivement d'une part à une source d'air comprimé 25 par l'intermédiaire de débitmètres à flotteurs 27, et de régulateurs de débit 29, et d'autre part, à un capteur transmetteur de pression différentielle 33.

Selon l'invention, les tubes plongeurs 21 et 23 débouchent respectivement dans la colonne aux points $P_1$ et $P_2$ par l'intermédiaire de capacités $C_1$ et $C_2$ ouvertes à leur extrémité inférieure, et présentant une section relativement importante par rapport à celle des tubes 21 et 23.

La présence des capacités $C_1$ et $C_2$ permet d'obtenir une grande fiabilité de mesure de la différence de pression malgré les fluctuations de la pression due à la pulsation. En effet, en raison des pulsations transmises par la tubulure 15 la pression p(t) au sein du liquide varie en fonction du temps. Deux cas peuvent être envisagés selon le mode de variation de cette pression :

1) La pression p varie lentement en fonction du temps, c'est-à-dire que dp/dt est inférieur ou égal à $Q/kV_0$, Q représentant le débit d'air dans la colonne, k étant une constante et $V_0$ représentant le volume des tubes plongeurs en amont des capacités $C_1$ et $C_2$. Dans ce cas, les tubes plongeurs 21 et 23 évacuent de l'air sans interruption avec un débit qui varie bien sûr dans le temps, ce dernier augmentant lorsque la pression diminue et inversement. Dans ces conditions, la pression transmise au capteur 33 est très voisine de la pression réelle au sein du liquide et l'indication différentielle est bien le reflet du poids de la colonne de liquide entre les deux points $P_1$ et $P_2$.

2) La pression p varie rapidement en fonction du temps, c'est-à-dire que dp/dt est supérieur à $Q/kV_0$.

Dans ces conditions, si les tubes plongeurs 21 et 23 ne sont pas associés aux capacités $C_1$ et $C_2$, mais débouchent directement dans la colonne 1, ces derniers n'évacuent de l'air qu'épisodiquement au moment où la pression est la plus faible et pendant un temps qui peut être très court. Le reste du temps, le liquide monte ou descend dans les tubes 21 et 23 et les pressions transmises au capteur de pression 33 sont donc influencées fortement par :

— le poids des colonnes de liquide remontées dans les tubes plongeurs 21 et 23,
— l'inertie du liquide en constante variation de vitesse, et
— les frottements du liquide dans les tubes plongeurs.

Etant donné que le système n'est jamais rigoureusement symétrique entre les points $P_1$ et $P_2$ et le dispositif d'alimentation en air comprimé, l'erreur introduite sur la mesure de la différence de pression peut devenir très importante. Ainsi, dans le bas d'une colonne pulsée, pour une fréquence de pulsations de 1 hertz et une amplitude de pression de 60 000 Pa (600 Millibars), la variation maximale de pression dp/dt pour une onde sinusoïdale est sensiblement égale à 188 500 $Pa.s^{-1}$ (1 885 millibars par seconde).

Si les canalisations 21 et 23 ont chacune une longueur de 20 m et un diamètre de 8 mm, et si le débit

4

moyen de barbotage du gaz est de 10 litres par heure, le rapport limite $Q/kV_0$ est de 280 Pa.s$^{-1}$ (2,8 Millibars par seconde).

On remarque ainsi que la variation de pression en fonction du temps est 673 fois supérieure à la limite admise pour laquelle les variations de pression dues aux pulsations exercent une influence négligeable sur la mesure de la différence de pression entre les points $P_1$ et $P_2$.

Aussi, conformément à l'invention, on modifie l'extrémité des tubes plongeurs 21 et 23 afin que les influences parasites décrites précédemment, en particulier la hauteur des colonnes de liquides qui remontent dans les tubes plongeurs 21 et 23, les phénomènes d'inertie et les frottements puissent être négligés.

Dans ce but, les tubes plongeurs 21 et 23 débouchent respectivement dans la colonne par l'intermédiaire des capacités $C_1$ et $C_2$ qui ont des dimensions telles que lors des variations de pression du liquide dues à la pulsation, l'interface liquide-gaz soit toujours située à l'intérieur de chacune des capacités $C_1$ et $C_2$ et que le niveau de cette interface varie peu à l'intérieur de chacune des capacités. De préférence, les capacités $C_1$ et $C_2$ ont de plus des dimensions telles que lors des variations de pression dues à la pulsation, la variation $\Delta x_1$ du niveau de l'interface gaz-liquide dans la capacité $C_1$ et la variation $\Delta x_2$ du niveau de l'interface gaz-liquide dans la capacité $C_2$ soient telles que $\Delta x_1/\Delta x_2$ soit sensiblement égal à $\rho_2/\rho_1$, $\rho_1$ et $\rho_2$ représentant respectivement la masse volumique du milieu liquide présent dans la colonne au niveau du point $P_1$ et la masse volumique du milieu liquide présent dans la colonne au niveau du point $P_2$, c'est-à-dire dans le cas de cette figure, la masse volumique $\rho_1$ de la phase légère et la masse volumique $\rho_2$ de la phase lourde.

Comme représenté sur la figure 2, les capacités $C_1$ et $C_2$ ont la forme de cylindres droits disposés verticalement et elles ont respectivement des sections transversales circulaires $S_1$ et $S_2$ et des hauteurs $l_1$ et $l_2$. Les sections $S_1$ et $S_2$ sont importantes par rapport à la section transversale des tubes plongeurs 21 et 23, ce qui permet de limiter à une valeur faible les variations du niveau de l'interface gaz-liquide dans les capacités $C_1$ et $C_2$ et de négliger de ce fait l'influence due à l'inertie et aux frottements de liquide.

De préférence, les volumes $V_1$ et $V_2$ des capacités $C_1$ et $C_2$ sont légèrement supérieurs aux volumes minima qui permettent d'obtenir un confinement des interfaces gaz-liquide au sein des capacités $C_1$ et $C_2$.

A titre d'exemple, on calcule, ci-après, les volumes $V_1$ et $V_2$ de capacités cylindriques $C_1$ et $C_2$ répondant à cette caractéristique. Lorsque la pression dans la colonne est égale à la pression minimale, le volume occupé par le gaz dans le circuit de gaz associé à la capacité $C_1$ est égal à $V_0 + V_1$, $V_0$ représentant le volume des canalisations d'air en amont de la capacité $C_1$ et $V_1$ le volume de cette dernière.

Lorsque la pression dans la colonne est égale à la pression maximale, le volume occupé par le gaz dans ce même circuit est égal à $V_0 + V_1 - \Delta V$ avec $\Delta V$ représentant le volume occupé par le liquide qui est remonté à l'intérieur de la capacité $C_1$.

Si $x_1$ représente la hauteur maximale de liquide dans $C_1$, on a donc $\Delta V = x_1 S_1$ et le volume occupé par le gaz est égal à $V_0 + (l_1 - x_1)S_1$.

Si l'on néglige la quantité de gaz introduite dans la colonne entre les instants où la pression passe du minimum au maximum, on a la relation suivante pour le circuit de gaz associé à la capacité $C_1$ :

$$p \text{ mini } [V_0 + l_1 S_1] = p \text{ maxi } [(V_0 + (l_1 - x_1)S_1]$$

Aussi, le volume minimal de la capacité $C_1$, qui permet de réaliser un confinement de l'interface gaz-liquide à l'intérieur de cette capacité, correspond à $l_1 = x_1$, soit à :

$$S_1 x_1 = V_0 \frac{p \text{ maxi} - p \text{ mini}}{p \text{ mini}}$$

et le volume de la capacité $C_1$ devra être tel que :

$$V_1 \geqslant V_0 \frac{p \text{ maxi} - p \text{ mini}}{p \text{ mini}}$$

En ce qui concerne la capacité $C_2$, on peut utiliser une capacité de volume $V_2$ égal au volume $V_1$ de la capacité $C_1$. En effet, au point $P_2$, les valeurs de la pression minimale et de la pression maximale sont pratiquement identiques à celles que l'on a au point $P_1$ car la hauteur de liquide entre les points $P_1$ et $P_2$ est faible par rapport à la pression absolue.

Dans ce cas, pour que les capacités $C_1$ et $C_2$ soient telles que les variations respectives $\Delta x_1$ et $\Delta x_2$ du niveau de l'interface gaz-liquide dans les capacités $C_1$ et $C_2$ satisfassent la relation $\Delta x_2/\Delta x_1 = \rho_1/\rho_2$, il suffit que les capacités $C_1$ et $C_2$ aient respectivement des sections $S_1$ et $S_2$ telles que $S_1/S_2 = \rho_1/\rho_2$.

En effet, si le volume $V_0$ des canalisations d'air en amont de la capacité $C_1$ est égal au volume $V_0$ des canalisations d'air en amont de la capacité $C_2$, lorsque la pression augmentera au sein du liquide de la colonne en raison des pulsations, les volumes occupés par le liquide dans les capacités $C_1$ et $C_2$ seront sensiblement identiques et correspondront à $\Delta V$.

De ce fait, on aura $\Delta x_1 S_1 = \Delta x_2 S_2$ et $\Delta x_2/\Delta x_1 = S_1/S_2 = \rho_1/\rho_2$.

Avec des capacités $C_1$ et $C_2$ présentant les caractéristiques géométriques précitées, la différence de pression mesurée par le capteur 33 correspond pratiquement à la différence de pression entre les points $P_1$ et $P_2$.

En effet, la pression dans le tube plongeur 21 mesurée par le capteur 33 est égale à $P_1 - \rho_1 g \Delta x_1$ avec $p_1$ représentant la pression du liquide au point $P_1$, et la pression dans le tube plongeur 23 mesurée par le capteur 33 est égale à $p_2 - \rho_2 \Delta x_2$ avec $p_2$ représentant la pression du liquide au point $P_2$.

Etant donné que les capacités $C_1$ et $C_2$ ont une section importante pour que les valeurs de $\Delta x_1$ et $\Delta x_2$ soient faibles, ce qui rend négligeable l'influence de l'inertie et des frottements du liquide, la différence de pression $\Delta p$ mesurée par le capteur 33 est égale à $p_2 - p_1 - g(\rho_2 \Delta x_2 - \rho_1 \Delta x_1)$.

Etant donné que $\Delta x_1/\Delta x_2 = \rho_2/\rho_1$ on a $\rho_2 \Delta x_2 - \rho_1 \Delta x_1 = 0$.

Aussi, on voit que malgré les variations de niveau du liquide dans les capacités $C_1$ et $C_2$, l'inertie et les frottements étant rendus négligeables par les sections importantes $S_1$ et $S_2$ de ces capacités, la différence de pression mesurée par le capteur est bien égale à la différence de pression au sein du liquide, entre les points $P_1$ et $P_2$.

A partir de la valeur de cette différence de pression, on peut déduire la valeur du niveau 17 de l'interface à partir des relations suivantes :

$$\Delta p = g(\rho_1 h_1 + \rho_2 h_2)$$

$$\text{et } h = h_1 + h_2$$

$h_1$ représentant la hauteur de liquide entre l'interface et le point $P_1$, $h_2$ la hauteur de liquide entre l'interface et le point $P_2$ et h la distance entre les points $P_1$ et $P_2$.

Pour obtenir ce niveau, le capteur 33 est muni de moyens pour déterminer $h_1$ ou $h_2$ à partir de $\Delta p$, h, $\rho_1$ et $\rho_2$ et pour émettre un signal représentatif de la valeur du niveau d'interface.

A titre d'exemple, on a donné dans le tableau ci-après les caractéristiques géométriques des capacités $C_1$ et $C_2$ adaptées à la mesure du niveau d'interface dans le décanteur inférieur d'une colonne pulsée dans laquelle la pression maximale au niveau du point $P_1$ est de $2,5 \cdot 10^5$ Pa, et la pression minimale de $1,5 \cdot 10^5$ Pa pour une pression de pulsation de $10^5$ Pa (1 bar), et dans laquelle on met en circulation une phase légère dont la masse volumique $\rho_1$ est de 820 kg/m³ et une phase lourde dont la masse volumique $\rho_2$ est de 1 150 kg/m³.

Tableau

| Capacité | Volume | Section | Hauteur |
|----------|--------|---------|---------|
| $C_1$ | $V_1 = 1\ell$ | $S_1 = 50,27 \text{ cm}^2$ | $\ell_1 = 19,9 \text{ cm}$ |
| $C_2$ | $V_2 = 1\ell$ | $S_2 = 70,50 \text{ cm}^2$ | $\ell_2 = 14,2 \text{ cm}$ |

Dans cet exemple, on a calculé $S_2$ en fonction de $S_1$, après avoir choisi pour la section $S_1$ un diamètre de 80 mm.

Le dispositif comportant ces deux capacités peut être utilisé pour mesurer le niveau d'interface dans une colonne pulsée ayant 930 cm² de section et comportant 8 m de garnissage, avec une distance de 70 cm entre les points $P_1$ et $P_2$. Dans ce cas, on peut utiliser un débit d'alimentation en air de 10 dm³ par heure avec un volume interne $V_0$ des circuits gazeux en amont des capacités $C_1$ et $C_2$ de 1 dm³, ce qui représente 20 m de canalisation ayant 8 mm de diamètre. Dans ces conditions, le dispositif de mesure de la différence de pression s'est avéré parfaitement fiable et pratiquement indépendant de la pression de pulsation entre 0 et $10^5$ Pa (1 000 millibars). Le résidu de l'influence de la pulsation est seulement matérialisé par une oscillation du signal délivré par le capteur 33, d'amplitude proportionnelle à la pression de la pulsation (4 % de l'échelle à la pression maximum).

En revanche, lorsqu'on utilise le même dispositif, mais sans les capacités $C_1$ et $C_2$, le signal ne peut être enregistré car le décalage de la mesure est tel que celle-ci se situe en dehors de l'échelle de l'enregistreur indiquant ainsi une fausse mesure du niveau de l'interface.

Pour améliorer encore la fiabilité du dispositif de l'invention, il est préférable que les deux circuits d'alimentation en gaz associé aux capacités $C_1$ et $C_2$ soient rigoureusement identiques en amont de ces dernières. En conséquence, les tubes plongeurs d'arrivée d'air comprimé doivent avoir le même volume interne (même longueur et même diamètre) et des accidents de parcours (coude, soudure) aussi communs que possible. De même il est important que le débit d'air de barbotage soit constant dans le temps et identique pour les deux tubes plongeurs.

Le dispositif décrit ci-dessus peut être utilisé également pour la mesure de la masse volumique du milieu liquide présent entre deux points de la colonne. dans ce cas, on utilise des capacités $C_1$ et $C_2$ de même section et on détermine à partir de la différence de pression mesurée par le capteur 33, qui correspond à $\rho hg$, h étant la distance entre les points $P_1$ et $P_2$, la masse volumique $\rho$ du milieu liquide présent dans la colonne entre les deux points de mesure.

## Revendications

1. Dispositif pour mesurer la différence de pression entre deux points $P_1$ et $P_2$ situés à l'intérieur d'une colonne pulsée (1), comportant un premier et un second tubes plongeurs (21, 23) débouchant respectivement dans la colonne aux niveaux des points $P_1$ et $P_2$, des moyens (25, 27, 29) pour introduire dans chacun desdits tubes plongeurs un gaz et le faire barboter dans le milieu liquide de la colonne, et des moyens (33) pour déterminer la différence de pression entre lesdits tubes plongeurs, caractérisé en ce que le premier et le second tubes plongeurs (21, 23) débouchent respectivement dans la colonne par l'intermédiaire de capacités $C_1$ et $C_2$ ouvertes à leur extrémité inférieure, et ayant des sections transversales considérablement plus grandes que celles des tubes plongeurs, lesdites capacités $C_1$ et $C_2$ ayant des dimensions telles que, lors des variations de pression dues à la pulsation, l'interface gaz-liquide soit toujours située dans chacune desdites capacités et que la variation $\Delta x_1$ du niveau de l'interface gaz-liquide dans la capacité $C_1$ et la variation $\Delta x_2$ du niveau de l'interface gaz-liquide dans la capacité $C_2$ soient telles que $\Delta x_1 / \Delta x_2$ reste sensiblement égal à $\rho_2 / \rho_1$, $\rho_1$, et $\rho_2$ représentant respectivement la masse volumique du milieu liquide présent dans la colonne au niveau du point $P_1$ et la masse volumique du milieu liquide présent dans la colonne au niveau du point $P_2$.

2. Dispositif selon la revendication 1, caractérisé en ce que les capacités $C_1$ et $C_2$ ont la forme de cylindres droits disposés verticalement, et en ce qu'elles ont respectivement des sections transversales $S_1$ et $S_1$ telles que $S_1 / \rho_1 = S_2 / \rho_2$.

3. Dispositif selon l'une quelconque des revendications 1 et 2, caractérisé en ce que le volume $V_1$ de la capacité $C_1$ est sensiblement égal au volume $V_2$ de la capacité $C_2$.

4. Dispositif selon l'une quelconque des revendications 1 à 3, caractérisé en ce que lesdites capacités $C_1$ et $C_2$ ont une section circulaire.

5. Dispositif selon l'une quelconque des revendications 1 à 4, caractérisé en ce que le volume du circuit gazeux en amont de la capacité $C_1$ est sensiblement égal au volume du circuit gazeux en amont de la capacité $C_2$.

6. Dispositif de mesure du niveau de l'interface entre deux phases liquides dans le décanteur d'une colonne pulsée, caractérisé en ce qu'il comprend un dispositif selon l'une quelconque des revendications 1 à 5 pour mesurer la différence de pression entre deux points $P_1$ et $P_2$ situés dans le décanteur de ladite colonne de part et d'autre de l'interface, et des moyens pour déterminer à partir de cette différence de pression, de la distance h entre les points $P_1$ et $P_2$ et des masses volumiques $\rho_1$ et $\rho_2$ des deux phases liquides en circulation dans la colonne, le niveau de l'interface dans ledit décanteur.

7. Dispositif de mesure de la masse volumique du milieu liquide situé au-dessus ou au-dessous du niveau de l'interface entre deux phases liquides présentes dans une colonne pulsée, caractérisé en ce qu'il comprend un dispositif selon l'une quelconque des revendications 1 à 5, pour mesurer la différence de pression entre deux points $P_1$ et $P_2$ situés dans ladite colonne du même côté de l'interface et des moyens pour déterminer à partir de cette différence de pression et de la distance h entre les points $P_1$ et $P_2$, la masse volumique du milieu liquide présent dans la colonne entre les points $P_1$ et $P_2$.

## Claims

1. Apparatus for measuring the pressure difference between two points $P_1$ and $P_2$ located within a pulse column (1), comprising first and second dip tubes (21, 23) respectively opening into the column level with the points $P_1$ and $P_2$, means (25, 27, 29) for introducing into each of said dip tubes a gas and to bubble it into the liquid medium in the column, and means (33) for determining the pressure difference between said dip tubes, characterized in that the first and second dip tubes (21, 23) open respectively into the column through nozzles $C_1$ and $C_2$ open at their lower end and having transverse sections considerably greater than those of the dip tubes, said nozzles $C_1$ and $C_2$ having dimensions such that, during pressure variations caused by pulsation, the gas-liquid interface is always located in each of said nozzles, and that the variation $\Delta x_1$ in the level of the gas-liquid interface in nozzle $C_1$, and the variation $\Delta x_2$ of the level of the gas-liquid interface in nozzle $C_2$ are such that $\Delta x_1 / \Delta x_2$ is substantially equal to $\rho_2 / \rho_1$, $\rho_1$ and $\rho_2$ respectively representing the density of the liquid medium present in the column at the level of point $P_1$ and the density of the liquid medium in the column at the level of point $P_2$.

2. Apparatus according to claim 1, characterized in that the nozzles $C_1$ and $C_2$ are in the form of vertically-disposed straight cylinders, and that they respectively have cross sections $S_1$ and $S_2$ such that $S_1 / \rho_1 = S_2 / \rho_2$.

3. Apparatus according to either of claims 1 and 2 characterized in that volume $V_1$ of the nozzle $C_1$ is substantially equal to volume $V_2$ of nozzle $C_2$.

4. Apparatus according to any one of claims 1 to 3, characterized in that said nozzles $C_1$ and $C_2$ have a circular cross section.

5. Apparatus according to any one of claims 1 to 4, characterized in that the volume of the gas circuit above nozzle $C_1$ is substantially equal to the volume of the gas circuit above nozzle $C_2$.

6. Apparatus for measurement of the level of the interface between two liquid phases in the decanter of a pulse column, characterized in that it comprises an apparatus according to any one of claims 1 to 5 for measuring the pressure difference between two points $P_1$ and $P_2$ located in the decanter of said column on either side of the interface, and means for determining the level of the interface in said column from said pressure difference, the distance h between the points $P_1$ and $P_2$, and the densities $\rho_1$ and $\rho_2$ of the two liquid phases circulating within the column.

7. Apparatus for measurement of the density of a liquid medium located above or below the level of the interface between two liquid phases present in a pulse column, characterized in that it comprises an apparatus according to any one of claims 1 to 5, for measuring the pressure difference between two points $P_1$ and $P_2$ located within said column on the same side of the interface and means for determining the density of the liquid medium present in the column between the points $P_1$ and $P_2$ from said pressure difference and the distance h between the points $P_1$ and $P_2$.

**Patentansprüche**

1. Vorrichtung zum Messen des Differenzdruckes zwischen zwei Punkten $P_1$ und $P_2$, die sich innerhalb einer Pulskolonne (1) befinden, mit einem ersten und einem zweiten Tauchrohr (21, 23), die in die Kolonne auf der Höhe des Punktes $P_1$ bzw. $P_2$ münden, Mitteln (25, 27, 29), um in jedes dieser Tauchrohre ein Gas einzuführen und dieses in das flüssige Medium der Kolonne einzublasen, und Mitteln (33) zum Bestimmen des Differenzdruckes zwischen den Tauchrohren, dadurch gekennzeichnet, daß das erste und das zweite Tauchrohr (21, 23) in die Kolonne mittels eines Rauminhaltes $C_1$ bzw. $C_2$ münden, die an ihren unteren Enden offen sind und Querschnitte aufweisen, die beträchtlich größer als diejenigen der Tauchrohre sind, daß die Rauminhalte $C_1$ und $C_2$ Abmessungen derart aufweisen, daß bei Druckänderungen aufgrund der Pulsation sich die Gas-Flüssigkeit-Grenzschicht immer in jedem der Rauminhalte befindet und daß die Änderung $\Delta x_1$ der Höhe der Gas-Flüssigkeit-Grenzsdchicht in dem Rauminhalt $C_1$ und die Änderung $\Delta x_2$ der Höhe der Gas-Flüssigkeit-Grenzschicht in dem Rauminhalt $C_2$ derart sind, daß $\Delta x_1/\Delta x_2$ im wesentlichen gleich $\rho_2/\rho_1$ bleibt, wobei $\rho_1$ und $\rho_2$ die Dichte des in der Kolonne auf der Höhe des Punktes $P_1$ befindenden Flüssigkeitsmedium bzw. die Dichte des in der Kolonne auf der Höhe des Punktes $P_2$ befindlichen Flüssigkeitsmediums ist.

2. Vorrichtung nach Anspruch 1, dadurch gekennzeichnet, daß die Rauminhalte $C_1$ und $C_2$ die Form von geraden, vertikal angeordneten Zylindern aufweisen und daß sie Querschnitte $S_1$ und $S_2$ aufweisen, so daß $S_1/\rho_1 = S_2/\rho_2$ ist.

3. Vorrichtung nach Anspruch 1 oder 2, dadurch gekennzeichnet, daß das Volumen $V_1$ des Rauminhaltes $C_1$ im wesentlichen gleich dem Volumen $V_2$ des Rauminhaltes $C_2$ ist.

4. Vorrichtung nach einem der Ansprüche 1 bis 3, dadurch gekennzeichnet, daß die Rauminhalte $C_1$ und $C_2$ einen kreisförmigen Querschnitt aufweisen.

5. Vorrichtung nach einem der Ansprüche 1 bis 4, dadurch gekennzeichnet, daß das Volumen des Gaskreislaufes stromaufwärts des Rauminhaltes $C_1$ im wesentlichen gleich dem Volumen des Gaskreislaufes stromaufwärts des Rauminhaltes $C_2$ ist.

6. Meßvorrichtung für die Höhe der Grenzschicht zwischen zwei flüssigen Phasen in einem Absitzgefäß einer Pulskolonne, dadurch gekennzeichnet, daß sie eine Vorrichtung gemäß einem der Ansprüche 1 bis 5 zum Messen des Druckunterschiedes zwischen zwei Punkten $P_1$ und $P_2$, die sich in dem Absitzgefäß der Kolonne beiderseits der Grenzschicht befinden, und Mittel umfaßt, um ausgehend von dieser Druckdifferenz, dem Abstand h zwischen den Punkten $P_1$ und $P_2$ und den Dichten $\rho_1$ und $\rho_2$ der zwei flüssigen, durch die Kolonne strömenden Phasen die Höhe der Grenzschicht in dem Absitzgefäß zu bestimmen.

7. Meßvorrichtung für die Dichte des Flüssigkeitsmediums, welches sich oberhalb oder unterhalb der Grenzschicht zwischen zwei in der Pulskolonne vorhandenen, flüssigen Phasen befindet, dadurch gekennzeichnet, daß sie eine Vorrichtung gemäß einem der Ansprüche 1 bis 5, um den Druckunterschied zwischen zwei sich auf der gleichen Seite der Grenzschicht befindenden Punkte $P_1$ und $P_2$ zu messen, und Mittel aufweist, um ausgehend von diesem Druckunterschied und dem Abstand h zwischen den Punkten $P_1$ und $P_2$ die Dichte des in der Kolonne zwischen den Punkten $P_1$ und $P_2$ vorhandenen Flüssigkeitsmediums zu bestimmen.

0 066 520

FIG.1

FIG.2

1